# EUROPEAN PATENT SPECIFICATION

(11) **EP 3 175 951 B1**
(45) Date of publication and mention of the grant of the patent: **06.01.2021**
(21) Application number: 16201529.1
(22) Date of filing: 30.11.2016
(51) Int. Cl.: B23Q 11/08

(54) **PROTECTIVE COVER**
SCHUTZABDECKUNG
COUVERCLE DE PROTECTION

(30) Priority: 02.12.2015 IT UB20156075
(43) Date of publication of application: 07.06.2017
(73) Proprietor: P.E.I. Protezioni Elaborazioni Industriali S.r.l., 40012 Calderara di Reno (Bologna) (IT)
(72) Inventor: BISSOLO, Fulvio, 39055 LAIVES (BOLZANO) (IT)
(74) Representative: Milli, Simone

(56) References cited:
- EP-A1- 2 708 318
- JP-A- S6 244 347

## Description

This invention relates to a protective cover.

In particular, this invention relates to a protective cover for shielding a machine tool, adapted to protect the machine from anything that can negatively affect the performance and operation of the slideways and the mechanical and electrical components of the tool head.

More specifically, the term slideways is used to mean all the tracks for the sliding and driving of the movable parts of a machine tool such as, for example, the work head and/or the structural parts designed to support it. Protective covers are configured to shield the slideways mainly from dust, swarf, coolant oils and fluids, water, moisture and anything that can damage the slideways (not only mechanically but also electronically because they often also comprise electronic position transducers).

Known in the state of the art are protective covers for shielding the slideways of machine tools using a plurality of overlapping panels driven in such a way as to slide relative to each other parallel to the slideways. In a central portion of them, the panels generally have an opening to allow the passage of the working head or other tool that forms part of the machine.

Generally, the machine tool comprises drive means which are configured in such a way as to drive a first panel, referred to as "motor-driven" (because it is connected directly to a movable part of the machine) and to drag along with the first panel all the other panels of the plurality of panels making up the protective cover in question.

Prior art protective covers comprise a series of abutment elements placed between one panel and another at longitudinally differentiated positions relative to the direction of translation of the slideway the cover itself is associated with. This technical aspect allows the panels of covers of this kind to be disposed and movable according to a succession of different times to allow driving all the panels in the set in succession by means of the aforementioned drive means.

Using a similar system, prior art protective covers are also designed to protect slideways which allow the work head to move in two directions simultaneously: for example along two axes "X-Y" at right angles to each other.

Protective covers of known type suffer from several use limitations, especially as regards their maintenance and/or substitution.

In effect, in a typical situation where a protective cover is damaged or a part of it breaks, the work head of the machine tool must be partly or, where possible, completely removed in order to remove the entire cover, or the damaged part of it, from the machine.

In this case, there is a good probability of being able to repair the protective cover but at the cost of lengthy machine downtime and high maintenance costs.

Alternatively, when the machine tool has a complex architecture and the work head cannot be removed to allow the protective cover to be removed, the solution usually adopted is to disassemble the cover piece by piece by cutting the protective panels one by one. This operation generally involves substituting many parts of the cover, which means considerably increasing the cost of reconditioning the protective cover of the slideway.

Document EP2708318 shows a protective covering device for machinery or equipment comprising a working element movable along a line has a fixed covering member and a plurality of movable covering members which are coupled slidably to each other and to the fixed covering member; each covering member comprises a box-shaped frame mounting a first covering panel and a second covering panel. In the front face to rear face direction, the frames are contained inside each other and the set of first panels and the set of second panels overlap in tile-like fashion and form, respectively, first and second matching portions of a front covering wall, separated from each other by a window through which the working element projects outwards; for each movable frame, there is at least one supporting member slidably coupled thereto and located on the opposite side of the front wall with respect to the frame.

In this context, the technical purpose which forms the basis of the present invention is to propose a protective cover for shielding the slideways of a machine tool to overcome the above mentioned drawbacks and limitations of the prior art.

In particular, the aim of this invention is to provide a protective cover for shielding the slideways of a machine tool and which allows maintenance operations to be carried out easily and in less time.

A further aim of this invention is to provide a protective cover for shielding the slideways of a machine tool and which can be assembled to/disassembled from the machine tool without necessitating special tools and/or operations.

A further and different aim of this invention is to provide a protective cover for shielding the slideways of a machine tool and whose structural configuration is capable of adapting to any type of machine tool and any type of slideway to be protected.

The technical purpose indicated and the aims specified are substantially achieved by a protective cover for shielding the slideways of a machine tool comprising the technical features described in one or more of the accompanying claims.

The dependent claims correspond to possible embodiments of the invention.

Further features and advantages of this invention are more apparent in the non-limiting description below, with reference to a preferred but non-exclusive embodiment of a protective cover for shielding a machine tool, as illustrated in the accompanying drawings, in which:
- Figure 1A is a schematic perspective view of a protective cover according to this invention;
- Figure 1B shows the protective cover of Figure 1A in a perspective view from a different side;
- Figure 2A is a schematic perspective view of a different embodiment of the protective cover according to this invention;
- Figure 2B is a schematic exploded perspective view of the protective cover of Figure 2A;
- Figure 3A is a schematic perspective view of the protective cover of Figure 1A with some parts removed in order to illustrate others that would otherwise be hidden;
- Figure 3B illustrates the protective cover of Figure 3A from a different angle from that of Figure 3A;
- Figure 3C shows an enlarged detail of the protective cover of Figure 3A;
- Figure 4 schematically illustrates a machine tool provided with the protective covers according to this invention;
- Figure 5A is a schematic perspective view of a further and different embodiment of the protective cover according to this invention;
- Figure 5B illustrates the protective cover of Figure 5A from a different angle from that of Figure 5A;
- Figure 6 is a schematic perspective view of the protective cover of Figure 1A with some parts removed in order to illustrate others that would otherwise be hidden;
- Figure 7 is a schematic perspective view of the protective cover of Figure 1A with some parts removed in order to illustrate others that would otherwise be hidden;
- Figure 8A is a schematic perspective view of the protective cover of Figure 1A with some parts removed in order to illustrate others that would otherwise be hidden;
- Figure 8B is a schematic perspective view of the protective cover of Figure 2A with some parts removed in order to illustrate others that would otherwise be hidden.

The numeral 1 in the accompanying drawings denotes the protective cover according to this invention.

More specifically, according to the inventive concept of the invention, the protective cover 1 comprises a driving cover member 10 associable with a movable part of a machine tool 100 movable translationally along the slideways 110 of the machine tool 100.

Preferably, the driving member 10 is made in two or more parts which can be coupled to each other using screwing means.

The protective cover 1 comprises at least one plurality of first cover members 20 which are located on a first side 11 of the driving cover member 10 (the bottom side if the protective cover 1 is mounted vertically) and which are operatively associated with it.

The protective cover 1 also comprises at least one plurality of second cover members 30 which are located on a second side 12 of the driving cover member 10 (the top side if the protective cover 1 is mounted vertically) and which are operatively associated with it.

Preferably, the driving cover member 10 has a first end side 11 configured in such a way that a leading cover member 21 forming part of the plurality of first cover members 20 can be reversibly fixed to it. Preferably, the driving cover member 10 has a second end side 12 configured in such a way that a leading cover member 31 forming part of the plurality of second cover members 30 can be reversibly fixed to it.

Preferably, the driving cover member 10 comprises two shaped plates 13a, 13b which, when coupled to each other, form a through hole for the passage of a head of the machine tool 100.

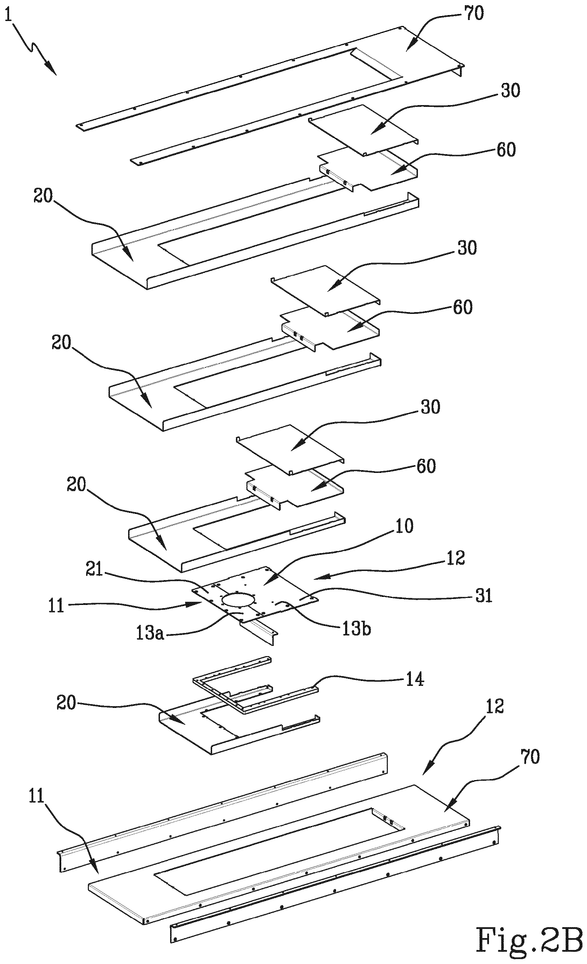

Preferably, the driving cover member 10 has a C-shaped mounting frame 14 in which at least a first of the second cover members 30 is reversibly fixed. A schematic example of the mounting frame 14 is illustrated in Figure 2B.

Both the first cover members 20 and the second cover members 30 are configured to overlap and slide relative to each other along a direction of motion "G" of the slideway 110 when the driving cover member 10 moves. Hereinafter, the terms "direction of motion" and "direction of extension" of the slideway 110 are used synonymously and denoted by the reference character "G", indicating a main direction along which the guide 110 extends and simultaneously allows a movable component of the machine tool 100 to slide.

The protective cover 1 comprises driving means 40 configured to allow translational movement in a predetermined succession at least of the first cover members 20 and the second cover members 30 when the driving cover member 10 moves.

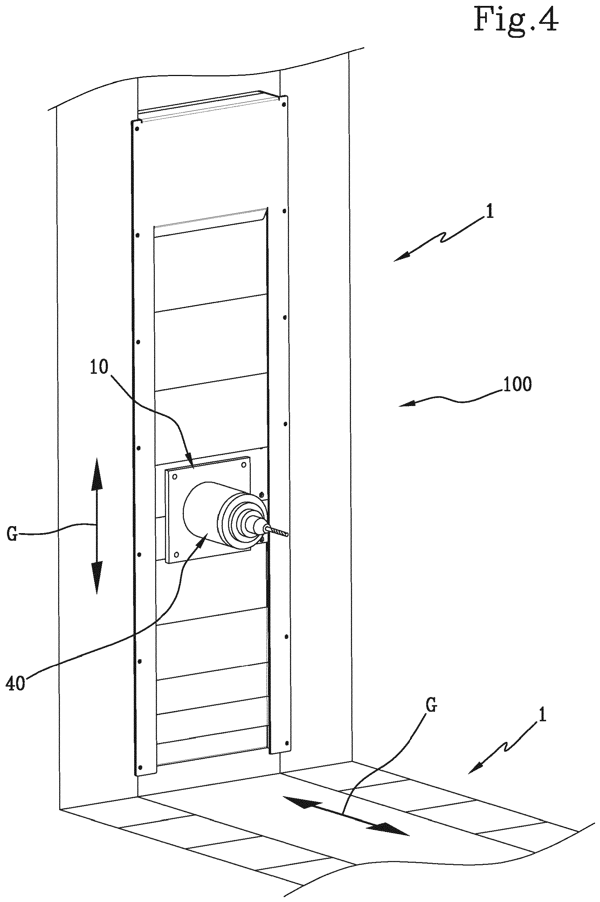

According to one embodiment of this invention, the driving means 40 comprise the same driving cover member 10 and allow at least the first cover members 20 and the second cover members 30 to be translationally driven in succession, so as to be intercepted at different times from each other to allow driving in accordance with the predetermined succession when the driving cover member 10 moves. A non-limiting example of this embodiment is illustrated in Figure 4.

In the above mentioned embodiment, the plurality of first cover members 20, the plurality of second cover members 30 and the plurality of coupling members 60 are configured to be slidable in predetermined succession between the members of the same plurality 20, 30 and 60 and in such a way that at least the plurality of first cover members 20 and the plurality of second cover members 30 are extended/gathered alternately.

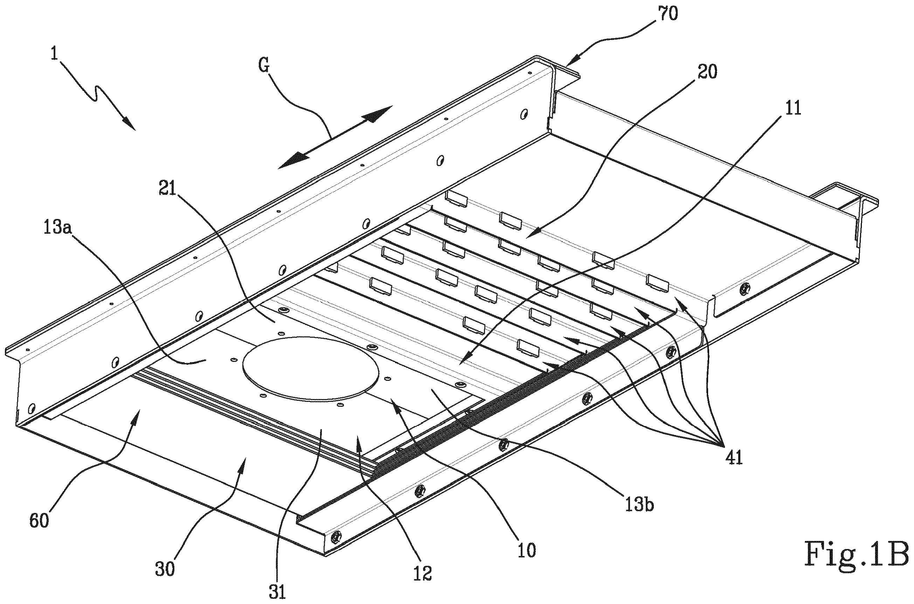

In this regard, as illustrated by way of non-limiting example in Figure 1B, the driving means 40 comprise abutment faces 41 present respectively at least on the first cover members 20 and on the second cover members 30 at different positions relative to the direction of motion G of the slideway 110, so that, when the driving cover member 10 moves, they are intercepted at different times from each other, thus allowing the first cover members 20 or the second cover members 30 to be driven according to the predetermined succession.

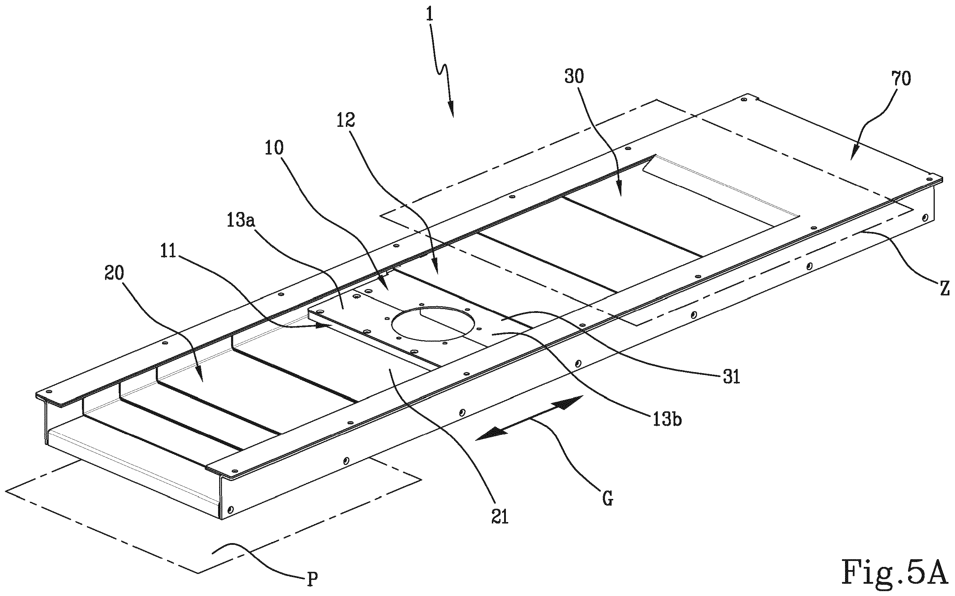

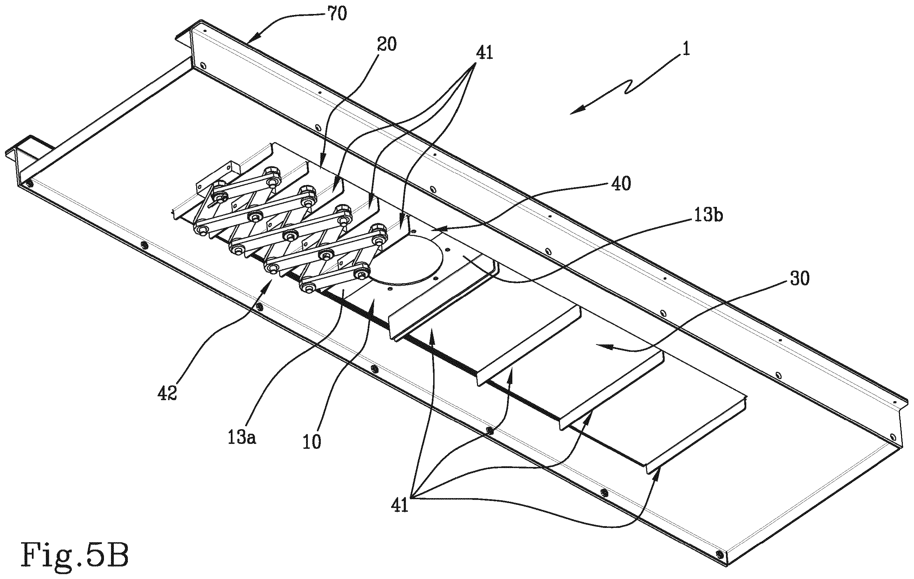

In a further, different embodiment of the invention, schematically illustrated by way of non-limiting example in Figures 5A and 5B, the driving means 40 of the protective cover 1 comprise a pantograph mechanism 42 connectable to the leading cover member 21 forming part of the plurality of first cover members 20 and to the remaining first cover members 20 in such a way as to produce in all the first cover members 20a a sliding motion which is synchronized (and preferably has the same speed). Preferably, the driving means 40 comprise a pantograph mechanism 42 connectable to the leading cover member 31 forming part of the plurality of second cover members 30 and to the remaining second cover members 30 in such a way as to produce in all the second cover members 30 a sliding motion which is synchronized and has the same relative speed (this further technical detail is not illustrated in Figures 5A and 5B).

The protective cover 1 of this invention also comprises locking means 50 which are operatively associated between the first cover members 20 and the second cover members 30.

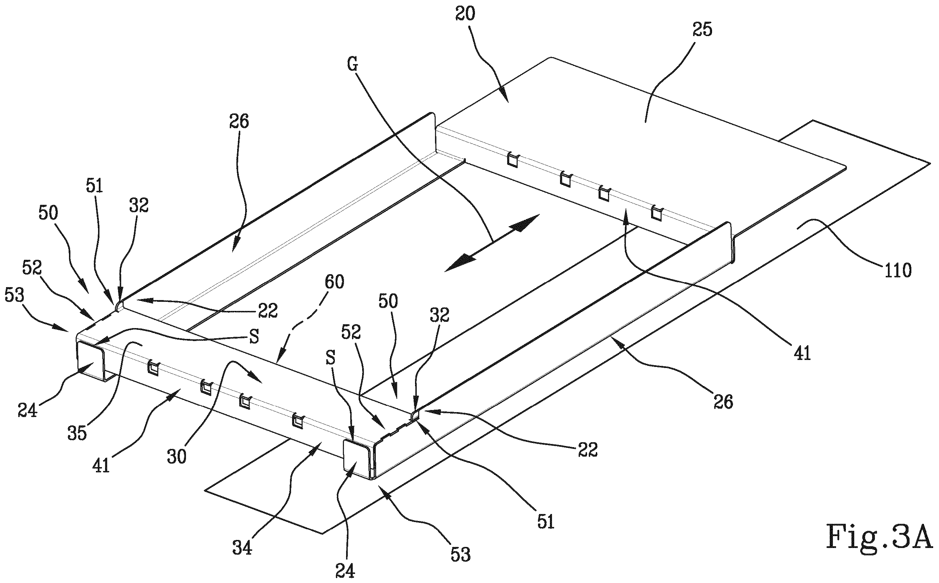

More specifically, as illustrated by way of non-limiting example in Figures 3A-3C, the locking means 50 have at least two distinct locking parts 51, 52 to allow reversible coupling at least between the first cover members 20 and the second cover members 30.

More in detail, in accordance with the inventive concept of this invention, a first part 51 of the locking means 50 comprises a stop between abutment tongues 32 of a second cover member 30 and a corresponding shoulder edge 22 of a first cover member 20.

Furthermore, in accordance with the inventive concept of this invention, teeth 23 of a first cover member 20 are inserted into a respective shaped portion 33 of a corresponding second cover member 30.

In accordance with the inventive concept of this invention, the protective cover 1 comprises a plurality of coupling members 60 configured to allow at least the plurality of second cover members 30 to be reversibly locked on the protective cover 1 in a predetermined succession.

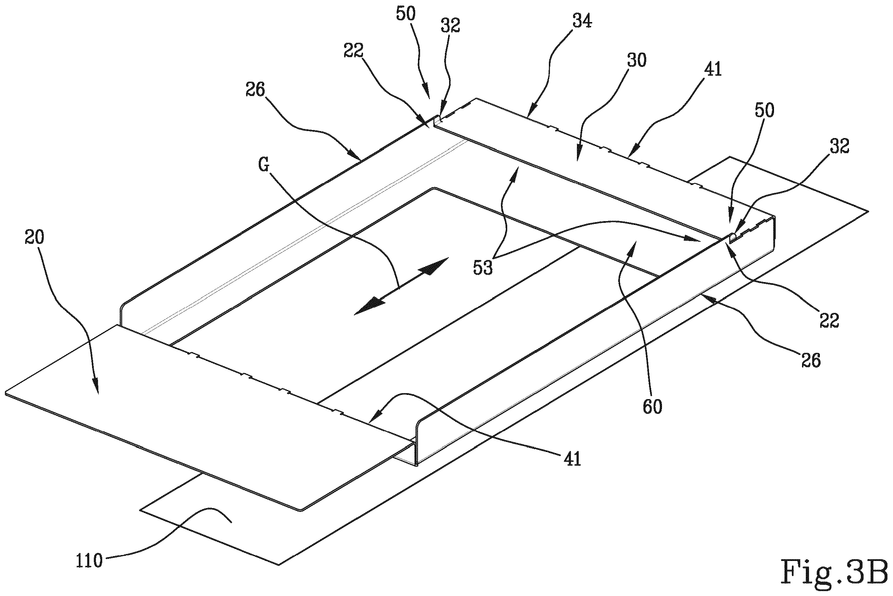

The coupling members 60 are configured to be coupled to and integral with a corresponding first cover member 20 and a corresponding second cover member 30 when the driving cover member 10 moves along the direction of motion "G of the slideway 110 of the machine tool, as illustrated schematically by way of non-limiting example in the detail shown in Figures 3A and 3B.

In other terms, the coupling members 60 are configured to make with the second cover members 30 a composite structure of the semi-closed shell or closed shell type in a configuration where the protective cover 1 is installed and in use on the machine tool 100.

Thus, the arrangement of the coupling members 60 installed together with the second cover members 30, in addition to the shape and size of the former, allows constructing a protective cover 1 with a more robust and stable structure than protective covers of the prior art.

More specifically, the coupling between the second cover members 30 and the corresponding coupling members 60 produces a predetermined succession of structural members which are reversibly fixed to each other stably during use of the protective cover 1 on the machine 100.

Advantageously, the locking means 50 are operatively associated between the first cover members 20, the second cover members 30 and the coupling members 60 and comprise a third locking part 53 to allow inserting a stop strip 34 present on a second cover member 30 into a locking slot "S" of predetermined width and formed between a bent edge 24 of a first cover member 20 and an abutment face 61 of a corresponding coupling member 60 preferably in a configuration where the protective cover 1 is assembled.

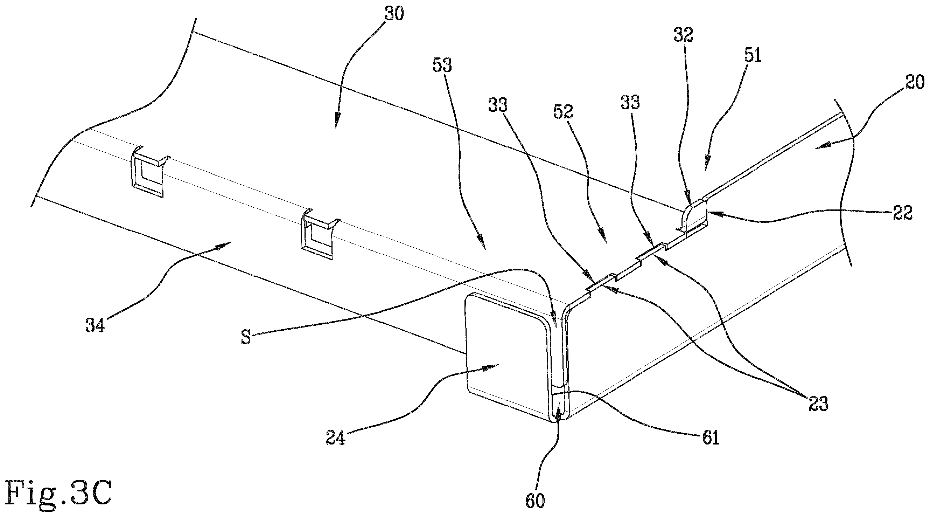

A schematic, non-limiting example of the locking means 50 is illustrated in the detail shown in Figure 3C.

In an embodiment not illustrated, the locking slot "S" may be covered with a resilient material capable of absorbing shocks and/or vibrations.

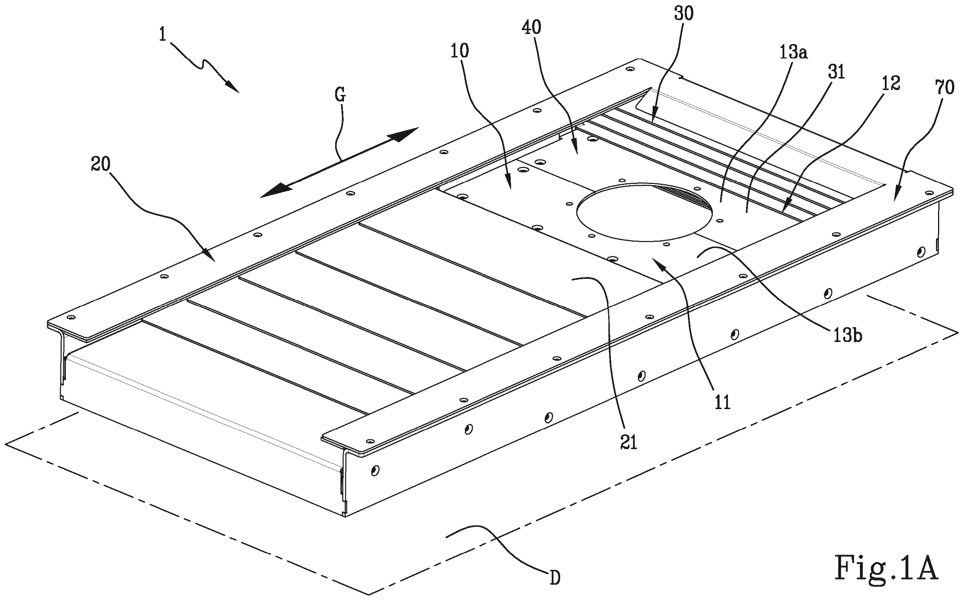

With reference now to the protective cover 1 illustrated for example in Figures 1, 2A and 5A-5B, the first cover members 20 and the second cover members 30 are mainly flat in shape and lie in respective planes "P" which are parallel to each other.

Preferably, the coupling members 60 are mainly flat in shape and lie in respective planes "Z" which are parallel to each other and, still more preferably, the planes "P" and "Z", which the first cover member 20, the second cover member 30 and the coupling members 60 lie in, are parallel to each other.

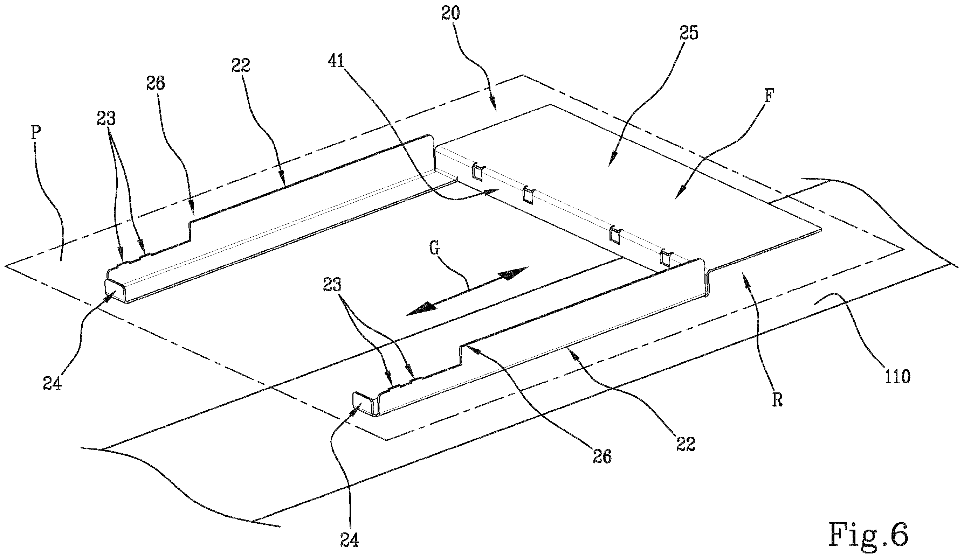

Looking in more detail, the first cover members 20, illustrated schematically by way of non-limiting example in Figure 6 and if viewed in plan relative to a respective plane "P" they lie in, have the shape of a quadrilateral frame with one open side.

In accordance with the inventive concept of this invention, the first cover member 20 has a central portion 25 with a front face "F" in view and a rear face "R" and at least one extension 26 running along the direction of extension "G" of the slideway 110 at a respective lateral edge.

Preferably, each first cover member 20 has two extensions 26 which, together with the shoulder edge 22 perpendicular to the respective plane "P", have an L-shaped transverse cross section. Thus, each first cover member 20 has two lateral shoulders running along the direction of extension "G" of the slideway 110 at a respective lateral edge.

Preferably, the extensions 26 extend along the direction of extension G of the slideway 110 for a length at least sufficient to exceed a lateral length of the driving cover member 10 and to reach the second side 12 where the second cover members 30 are located.

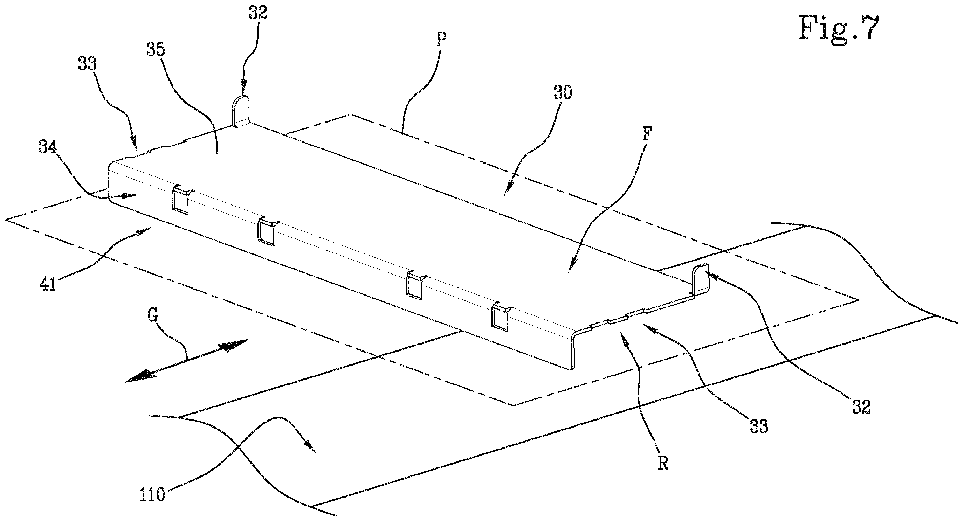

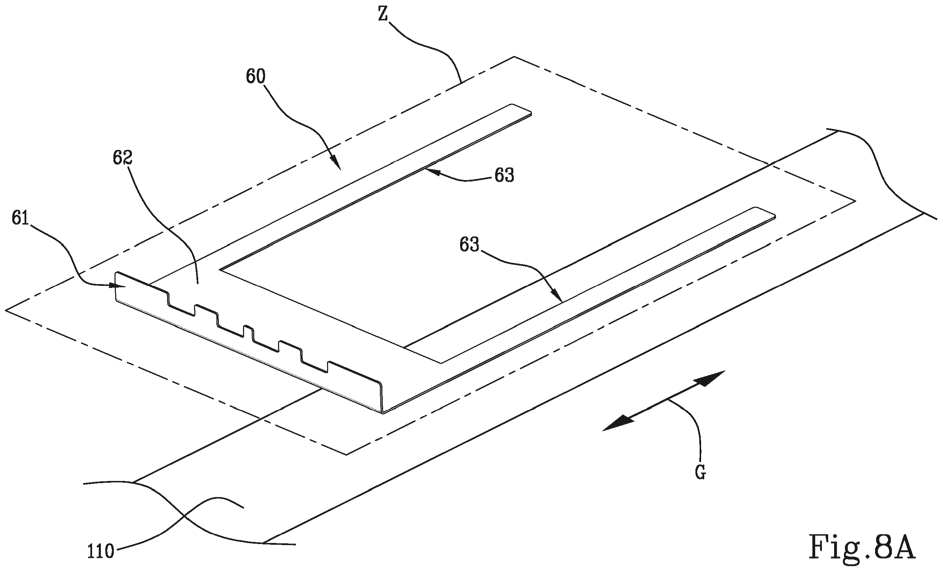

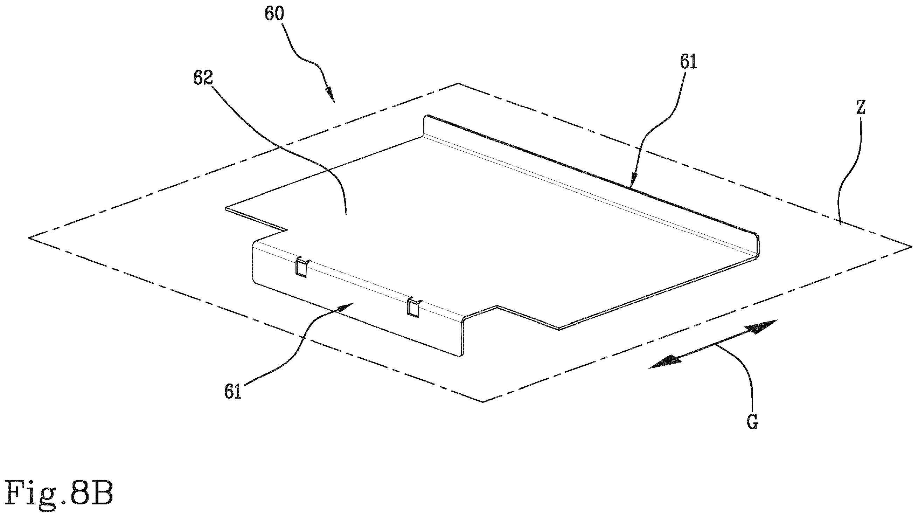

Each first cover member 20 has at least one extension 26 which, together with the shoulder edge 22, has an L-shaped transverse cross section. More specifically, the shoulder edge 22 is perpendicular to the plane "P", and extends along the direction of extension "G" of the slideway 110 for a predetermined length. The extensions 26 can be regarded as a pair of appendages whose ends are used to receive a corresponding second cover member 30 and the corresponding coupling member 60. By way of non-limiting example, Figure 7 schematically illustrates a cover member 30 and Figure 8 schematically illustrates a coupling member 60.

Preferably, in accordance with the inventive concept of this invention, an abutment face 41 of the drive means 40 is formed on an extension of the central portion 25 of each first cover member 20. Preferably, the abutment face 41 of the first cover members 20 is provided with slots or windows into which resilient elements used to absorb shocks and/or vibrations (not illustrated in the accompanying drawings) can be inserted.

The downwardly indented portion made on each shoulder edge 22 of each first cover member 20 allows abutting the corresponding abutment tongues 32 of the second cover member 30 (illustrated schematically in Figure 7). This coupling substantially produces the first locking part 51 of the locking means 50 as mentioned above.

Along the shoulder edge 22 of it, each extension 26 is provided with teeth 23, preferably at least two teeth 23, configured to be inserted into the shaped portion 33 of the corresponding second cover member 30. This coupling substantially produces the second coupling/locking part 52 of the locking means 50 as mentioned above.

The bent edge 24 at the free end of each extension 26 of each first cover member 20 lies in a plane transverse to the plane "P" the selfsame first cover member 20 lies in. In the preferred embodiment, the bent edges 24 of each first cover member 20 are positioned perpendicularly to the plane "P".

It is noted that the bent edges 24 are the parts of the first cover members 20 which act in conjunction with the abutment face 61 of a corresponding coupling member 60 to form the locking slot "S" of predetermined width adapted to allow insertion of the stop strip 34 made on a corresponding second cover member 30. This coupling substantially produces the third locking part 53 of the locking means 50 as mentioned above. Preferably, the length of the first cover members 20 progressively increases from the first member 20 nearest the driving cover member 10 to the ends of the protective cover 1.

Looking in more detail, the second cover members 30, illustrated schematically by way of non-limiting example in Figure 7 and, if viewed in plan relative to a respective plane "P", are rectangular in shape and are substantially flat for most of their extension.

The second cover members 30, too, have a central portion 35 with a front face "F" in view and a rear face "R" and the stop strip 34 facing towards the second side 12 of the driving cover member 10. Along the two lateral edges of it, each cover member 30 has a respective shaped portion 33 adapted to receive the aforementioned teeth 23.

Preferably, the stop strip 34 of the second cover members 30 is provided with slots or windows into which resilient elements used to absorb shocks and/or vibrations (not illustrated in the accompanying drawings) can be inserted. In accordance with the inventive concept of this invention, the stop strip 34 of each second cover member 30 can also be likened to an abutment face 41 of the drive means 40, as mentioned above.

In a first embodiment of this invention, illustrated schematically in Figures 1A and 1B, the length of the second cover members 30 progressively decreases from the first member 30 nearest the driving cover member 10 to the ends of the protective cover 1.

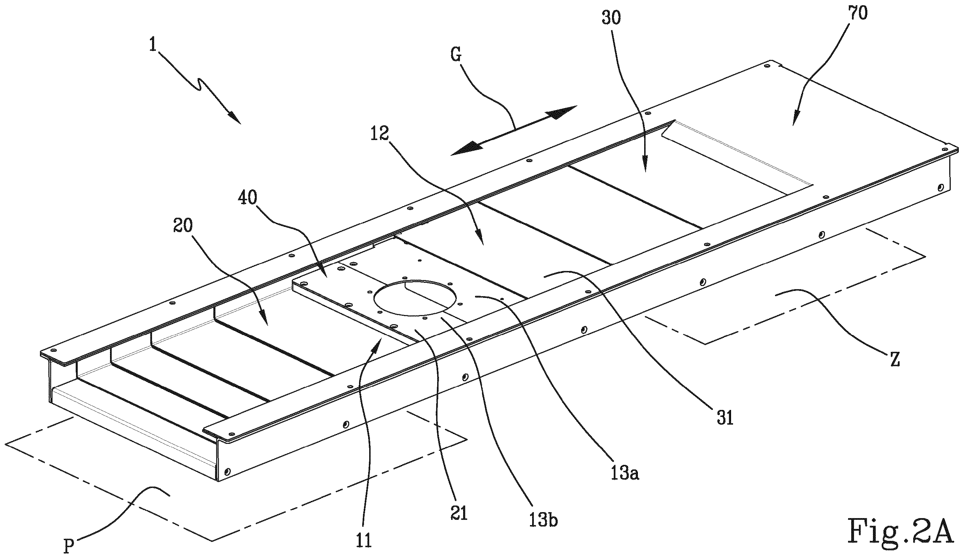

In a second embodiment of this invention, illustrated schematically in Figures 2A and 2B, the second cover members 30 are equal in length or their length progressively decreases from the first member 30 nearest the driving cover member 10 to the ends of the protective cover 1.

In a third embodiment of this invention, illustrated schematically in Figures 5A and 5B, the second cover members 30 are equal in length or their length progressively decreases from the first member 30 nearest the driving cover member 10 to the ends of the protective cover 1.

Preferably, for example, the number of first cover members 20 in the protective cover 1 is equal to "n" and the number of second cover members 30 is equal to "n-1", excluding base and/or cover portions 70 provided in the different embodiments of the protective cover 1.

It is noted that in accordance with the inventive concept of this invention, the coupling members 60 have at least two different configurations, described below and illustrated by way of non-limiting example in Figures 8A and 8B, respectively.

In a first embodiment of this invention, the coupling members 60 are made as illustrated in Figure 8A. Viewed in plan relative to a respective plane "Z" they lie in, the cover members are rectangular in shape and are substantially flat for most of their extension. The coupling members 60 have a central portion 62 lying in a plane "Z" and at least one abutment face 61 on an edge which is not one of the two lateral edges.

The coupling members 60 have lateral extension members 63 which extend along lateral edges in such a way as to form a shape coupling with a respective first cover member 20 and in such a way as to at least partly overlap the respective extensions 26 of the first cover members 20. In other terms, a reversible mechanical lock is created between a coupling member 60 and the corresponding first cover member 20.

During coupling to a corresponding first cover member 20, the lateral extension members 63 of the coupling members 60 allow positioning the central portion 62 of each coupling member towards the second side 12 of the driving cover member 10 and thus keeping the central portion 25 of the corresponding first cover member 20 facing towards the first side 11 of the driving cover member 10.

In other terms, in the first embodiment described here, each coupling member 60 can be coupled to a corresponding first cover member 20 by means of crossed insertion, placing the respective central portions 25, 62 to face towards the first side 11 and the second side 12 of the driving cover member 10 of the protective cover 1.

Each coupling member 60 is thus coupled to the corresponding first cover member 20 in such a way as to perimetrically surround at least the driving cover member 10.

In this embodiment of the protective cover 1, the coupling members 60 are progressively longer from the driving cover member 10 to the ends of the protective cover 1 because they must include the stroke that can be travelled by the preceding cover panels as they come into abutment during the sliding movement of the driving cover member 10.

In a second embodiment of this invention, the coupling members 60 are made as illustrated in Figure 8B. The coupling members 60 have a central portion 62 lying in a plane "Z" and two abutment faces 61 on each edge which is not one of the two lateral edges.

Preferably, the two abutment faces 61 lie in a plane perpendicular to the plane "Z" the coupling member 60 lies in. Preferably, the abutment faces 61 are provided with slots or windows into which resilient elements used to absorb shocks and/or vibrations (not illustrated in the accompanying drawings) can be inserted.

In this embodiment of the protective cover 1, the coupling members 60 are configured to be locked, by means of removable stops(not illustrated in the accompanying drawings), to a corresponding first cover member 20 in such a way as to be integral with a corresponding first cover member 20 and a corresponding second cover member 30 when the driving cover member 10 moves along the direction of motion "G" of the slideway 110.

The removable stops allow defining a seat for insertion of each coupling member 60 on a corresponding first cover member 20, preventing unwanted sliding of one relative to the other because they define an area of insertion of the coupling member 60 on the corresponding first cover member 20.

The coupling of the members 20, 30, 60 as described above allows forming a module of the protective cover 1 of predetermined size. To make the protective cover 1 of the invention, each module is inserted in series, as illustrated by way of example in the exploded view of Figure 2B, starting from the largest, outermost one to the smallest one in the middle. By way of non-limiting example, a method for disassembling the protective cover 1, illustrated in Figures 1A and 1B installed on the machine 100, comprises the following steps:
- removing the cover portion 70 of the protective cover 1;
- removing any shims from the sides of the cover 1;
- proceeding to remove the first and second outermost cover members 30, that is, the ones furthest from the driving cover member 10;
- proceeding to remove all the other second cover members 30, releasing them manually from the corresponding first cover member 20 and coupling member 60;
- removing the driving cover member 10;
- removing all the coupling members 60 and the corresponding first cover member 20 starting from the modules in the middle, that is, those just under the driving cover member 10;
- sliding out all the other first cover members 20 and the corresponding coupling members 60;
- separating each coupling member 60 from the corresponding first cover members 20.

The protective cover 1 can be assembled by substantially following the disassembling method in reverse.

This invention achieves the present aims.

Advantageously, the invention provides a protective cover which can be disassembled quickly and without using special tools.

The invention also advantageously provides a protective cover whose maintenance involves an operator who simply has to substitute only a damaged cover member and not the entire cover.

Advantageously, the invention provides a protective cover which is more precise, more robust and easier to assemble/disassemble than prior art protective covers currently available on the market.

It should be noted that this cover can be assembled and disassembled extremely easily without operating on other parts of the machine (tool head, etc.). Advantageously, the invention provides a protective cover having a modular structure and which can be quickly and economically adapted for the size of any machine tool and for any type of slideway to be protected.

## Claims

1. A protective cover (1) for slideways (110) of a machine tool (100), comprising:
- a driving cover member (10) associable with a movable part of a machine tool (100) movable translationally along the slideways (110);
- a plurality of first cover members (20) located on a first side (11) of the driving cover member (10) and operatively associated therewith and configured to overlap and slide relative to each other along a direction of motion (G) of the slideway (110) when the driving cover member (10) moves;
- a plurality of second cover members (30) located on a second side (12) of the driving cover member (10) and operatively associated therewith and configured to overlap and slide relative to each other along a direction of motion (G) of the slideway (110) when the driving cover member (10) moves;
- driving means (40) configured to allow translational movement in a predetermined succession at least of the first cover members (20) and the second cover members (30) when a driving cover member (10) moves;
wherein the protective cover (1) comprises a plurality of locking means (50) operatively associated between the first cover members (20) and the second cover members (30), each locking means (50) of the plurality of locking means (50) having at least two distinct locking parts (51, 52) to allow reversible coupling between each first cover member (20) in the plurality of first cover members (20) and a corresponding second cover member (30) in the plurality of second cover members (30).

2. The protective cover (1) according to claim 1, comprising a plurality of coupling members (60) configured to allow at least the plurality of second cover members (30) to be reversibly locked on the protective cover (1) in a predetermined succession, wherein the coupling members (60) are configured to make with the second cover members (30) a composite structure of the semi-closed and/or closed shell type in a configuration where the protective cover (1) is installed and in use on the machine tool (100).

3. The protective cover (1) according to claim 1 or 2, wherein the at least two distinct locking parts (51, 52) of each locking means (50) comprise a stop between abutment tongues (32) of a second cover member (30) and a corresponding shoulder edge (22) of a first cover member (20) and teeth (23) of a first cover member (20) inserted into a respective shaped portion (33) of a corresponding second cover member (30).

4. The protective cover (1) according to claim 3 when dependent on claim 2, wherein the plurality of locking means (50) are operatively associated between the first cover members (20), the second cover members (30) and the coupling members (60) and comprise a third locking member (53) to allow inserting a stop strip (34) present on a second cover member (30) into a locking slot (S) of predetermined width and formed between a bent edge (24) of a first cover member (20) and an abutment face (61) of a corresponding coupling member (60) in a configuration where the protective cover is installed and in use on the machine tool.

5. The protective cover (1) according to claim 4, wherein the first cover members (20) and the second cover members (30) are mainly flat in shape and lie in respective planes (P) which are parallel to each other.

6. The protective cover (1) according to claim 5, wherein the first cover members (20), are, in a plan view relative to a respective plane (P) they lie in, in the shape of a quadrilateral frame with one open side, the first cover members (20) having a central portion (25) with a front face (F) in view and a rear face (R) and two extensions (26) running along the direction of extension (G) of the slideway (110) at respective lateral edges.

7. The protective cover (1) according to claim 6, wherein the extensions (26) extend along the direction of extension (G) for a length at least sufficient to exceed a lateral length of the driving cover member (10) and to reach the second side (12) where the second cover members (30) are located in a configuration where the protective cover (1) is installed and in use on the machine tool (100).

8. The protective cover (1) according to claim 6 or 7, wherein at least one extension (26) of each first cover member (20) has an L-shaped transverse cross section, with the shoulder edge (22) perpendicular to the plane (P), and extends along the direction of extension (G) of the slideway (110) for a predetermined length.

9. The protective cover (1) according to claim 8, wherein both extensions (26) of each first cover member (20) have an L-shaped transverse cross section, with the shoulder edge (22) perpendicular to the respective plane (P).

10. The protective cover (1) according to claim 9, wherein the teeth (23) of each locking means (50) are located along each shoulder edge (22) of each side shoulder of each first cover member (20).

11. The protective cover (1) according to any one of claims 6-10, wherein the bent edge (24) is made at a free end of at least one extension (26) of each first cover member (20) and lies in a plane transverse to the plane (P) the selfsame first cover member (20) lies in, the bent edge (24) preferably facing the front face (F) and being positioned perpendicularly to the plane (P) which the first cover member (20) lies in.

12. The protective cover (1) according to any one of claims 5-11, wherein the second cover members (30) are, in a plan view relative to a respective plane (P) they lie in, rectangular in shape and have a front face (F) in view and a rear face (R), the second cover members (30) having two abutment tongues (32) at respective lateral edges and wherein the abutment tongues (32) lie in respective planes perpendicular to the plane (P) the selfsame second cover member (30) lies in and at least one stop strip (34) on a non-lateral edge, the abutment tongues (32) being preferably convergent towards the front face (F).

13. The protective cover (1) according to any one of claims 2-12, wherein the coupling members (60) are configured to be coupled to and integral with a corresponding first cover member (20) and a corresponding second cover member (30) when the driving cover member (10) moves along the direction of motion (G) of the slideway (110).

14. The protective cover (1) according to any one of claims 2-12, wherein the coupling members (60) are configured to be locked, by means of removable abutments, to a corresponding first cover member (20) in such a way as to be integral with a corresponding first cover member (20) and a corresponding second cover member (30) when the driving cover member (10) moves along the direction of motion (G) of the slideway (110).

15. The protective cover (1) according to any one of claims 2-14, wherein the plurality of first cover members (20), the plurality of second cover members (30) and the plurality of coupling members (60) are configured to be slidable in predetermined succession between the members of the same plurality (20, 30, 60) and in such a way that at least the plurality of first cover members (20) and the plurality of second cover members (30) are extended/gathered in a configuration where the protective cover (1) is installed and in use on the machine tool (100).

16. The protective cover (1) according to any one of claims 1-15, wherein the driving means (40) comprise abutment faces (41) present respectively at least on the first cover members (20) and on the second cover members (30) at different positions relative to the direction of motion (G) of the slideway (110), so that, when the driving cover member (10) moves, they are intercepted at different times from each other, thus allowing the first cover members (20) or the second cover members (30) to be driven according to the predetermined succession in a configuration where the protective cover (1) is installed and in use on the machine tool (100).

17. The protective cover (1) according to any one of claims 1-16, wherein the driving means (40) comprise the driving cover member (10) which is configured to allow at least the first cover members (20) and the second cover members (30) to be translationally driven in succession, so as to be intercepted at different times from each other to allow driving in accordance with the predetermined succession when the driving cover member (10) moves, in a configuration where the protective cover (1) is installed and in use on the machine tool (100).

18. The protective cover (1) according to any one of claims 1-17, wherein the driving cover member (10) has a first end edge (11), to which a leading cover member (21) forming part of the plurality of first cover members (20) is reversibly fixed, and a second end edge (12) to which a leading cover member (31) forming part of the plurality of second cover members (30) is reversibly fixed.

19. The protective cover (1) according to claim 18, wherein the driving means (40) comprise a pantograph mechanism (42) connectable to the leading cover member (21) forming part of the plurality of first cover members (20) and to the remaining first cover members (20) in such a way as to synchronize the sliding motion at least of all the first cover members (20) in a configuration where the protective cover (1) is installed and in use on the machine tool (100).

20. The protective cover (1) according to claim 19, wherein the driving means (40) comprise a pantograph mechanism (42) connectable to the leading cover member (31) forming part of the plurality of second cover members (30) and to the remaining second cover members (30) in such a way as to synchronize the sliding motion of all the second cover members (30) in a configuration where the protective cover (1) is installed and in use on the machine tool (100).

## Patentansprüche

1. Schutzabdeckung (1) für Gleitbahnen (110) einer Werkzeugmaschine (100), umfassend:
- ein Antriebsabdeckungselement (10), das mit einem beweglichen Teil einer Werkzeugmaschine (100) assoziierbar ist, der translatorisch entlang der Gleitbahnen (110) beweglich ist;
- eine Vielzahl an ersten Abdeckungselementen (20), die sich auf einer ersten Seite (11) des Antriebsabdeckungselements (10) befinden und damit betriesbwirksam assoziiert sind und so konfiguriert sind, dass sie überlappen und sich entlang einer Bewegungsrichtung (G) der Gleitbahn (110) relativ zueinander gleiten, wenn sich das Antriebsabdeckungselement (10) bewegt;
- eine Vielzahl an zweiten Abdeckungselementen (30), die sich auf einer zweiten Seite (12) des Antriebsabdeckungselements (10) befinden und damit betriesbwirksam assoziiert sind und so konfiguriert sind, dass sie überlappen und sich entlang einer Bewegungsrichtung (G) der Gleitbahn (110) relativ zueinander gleiten, wenn sich das Antriebsabdeckungselement (10) bewegt;
- Antriebsmittel (40), die konfiguriert sind, um eine Translationsbewegung in einer vorbestimmten Abfolge mindestens der ersten Abdeckungselemente (20) und der zweiten Abdeckungselemente (30) zu ermöglichen, wenn sich ein Antriebsabdeckungselement (10) bewegt; wobei die Schutzabdeckung (1) eine Vielzahl an Verriegelungsmitteln (50) umfasst, die betriebswirksam zwischen den ersten Abdeckungselementen (20) und den zweiten Abdeckungselementen (30) assoziiert sind, wobei ein jedes Verriegelungsmittel (50) der Vielzahl an Verriegelungsmitteln (50) mindestens zwei unterschiedliche Verriegelungsteile (51, 52) aufweist, um eine reversible Kopplung zwischen einem jeden ersten Abdeckungselement (20) in der Vielzahl der ersten Abdeckungselemente (20) und einem entsprechenden zweiten Abdeckungselement (30) in der Vielzahl der zweiten Abdeckungselemente (30) zu ermöglichen.

2. Schutzabdeckung (1) nach Anspruch 1, umfassend eine Vielzahl an Kopplungselementen (60), die so konfiguriert sind, dass mindestens die Vielzahl an zweiten Abdeckungselementen (30) in einer vorbestimmten Abfolge reversibel an der Schutzabdeckung (1) verriegelt werden können; wobei die Kopplungselemente (60) konfiguriert sind, um mit den zweiten Abdeckungselementen (30) eine Verbundstruktur vom Typ halbgeschlossener und/oder geschlossener Hülle in einer Konfiguration herzustellen, in der die Schutzabdeckung (1) an der Werkzeugmaschine (100) installiert ist und im Gebrauch ist.

3. Schutzabdeckung (1) nach Anspruch 1 oder 2, wobei die mindestens zwei unterschiedlichen Verriegelungsteile (51, 52) eines jeden Verriegelungsmittels (50) einen Anschlag zwischen den Widerlagerlaschen (32) eines zweiten Abdeckungselements (30) und eine entsprechende Schulterkante (22) eines ersten Abdeckungselements (20) und Zähne (23) eines ersten Abdeckungselements (20), das in einem jeweils geformten Abschnitt (33) eines entsprechenden zweiten Abdeckungselements (30) eingesetzt ist, umfassen.

4. Schutzabdeckung (1) nach Anspruch 3, wenn abhängig von Anspruch 2, wobei die Vielzahl an Verriegelungsmitteln (50) betriebswirksam zwischen den ersten Abdeckungselementen (20), den zweiten Abdeckungselementen (30) und den Kopplungselementen (60) assoziiert sind und ein drittes Verriegelungselement (53) umfassen, um das Einführen eines Anschlagstreifens (34), der an einem zweiten Abdeckungselement (30) vorhanden ist, in einen Verriegelungsschlitz (S) mit vorbestimmter Breite, der zwischen einer gebogenen Kante (24) eines ersten Abdeckungselements (20) und einer Widerlagerfläche (61) eines entsprechenden Kopplungselements (60) ausgebildet ist, in einer Konfiguration, in der die Schutzabdeckung an der Werkzeugmaschine installiert und im Gebrauch ist, zu ermöglichen.

5. Schutzabdeckung (1) nach Anspruch 4, wobei die ersten Abdeckungselemente (20) und die zweiten Abdeckungselemente (30) hauptsächlich eine flache Form aufweisen und in entsprechenden Ebenen (P) liegen, die parallel zueinander verlaufen.

6. Schutzabdeckung (1) nach Anspruch 5, wobei die ersten Abdeckungselemente (20) in einer Draufsicht relativ zu einer jeweiligen Ebene (P), in der sie liegen, die Form eines viereckigen Rahmens mit einer offenen Seite aufweisen, wobei die ersten Abdeckungselemente (20) einen zentralen Abschnitt (25) mit einer vorderseitigen Fläche (F) sichtbar und einer rückseitigen Fläche (R) und zwei Erstreckungen (26) aufweisen, die entlang der Erstreckungsrichtung (G) der Gleitbahn (110) an jeweiligen Seitenkanten verlaufen.

7. Schutzabdeckung (1) nach Anspruch 6, wobei sich die Erstreckungen (26) entlang der Erstreckungsrichtung (G) über eine Länge erstrecken, die mindestens ausreicht, um eine seitliche Länge des Antriebsabdeckungselements (10) zu überschreiten und die zweite Seite (12) zu erreichen, auf der sich die zweiten Abdeckungselemente (30) in einer Konfiguration befinden, in der die Schutzabdeckung (1) an der Werkzeugmaschine (100) installiert und im Gebrauch ist.

8. Schutzabdeckung (1) nach Anspruch 6 oder 7, wobei mindestens eine Erstreckung (26) eines jeden ersten Abdeckungselements (20) einen L-förmigen Querschnitt aufweist, wobei die Schulterkante (22) senkrecht zur Ebene (P) verläuft und sich entlang der Erstreckungsrichtung (G) der Gleitbahn (110) für eine vorbestimmte Länge erstreckt.

9. Schutzabdeckung (1) nach Anspruch 8, wobei beide Erstreckungen (26) eines jeden ersten Abdeckungselements (20) einen L-förmigen Querschnitt aufweisen, wobei die Schulterkante (22) senkrecht zur jeweiligen Ebene (P) verläuft.

10. Schutzabdeckung (1) nach Anspruch 9, wobei sich die Zähne (23) eines jeden Verriegelungsmittels (50) entlang einer jeden Schulterkante (22) einer jeden Seitenschulter eines jeden ersten Abdeckungselements (20) befinden.

11. Schutzabdeckung (1) nach einem der Ansprüche 6-10, wobei die gebogene Kante (24) an einem freien Ende von mindestens einer Erstreckung (26) eines jeden ersten Abdeckungselements (20) hergestellt ist und in einer Ebene quer zur Ebene (P) liegt, in der das gleiche erste Abdeckungselement (20) liegt, wobei die gebogene Kante (24) vorzugsweise zur vorderseitigen Fläche (F) zeigt und senkrecht zu der Ebene (P) positioniert ist, in der das erste Abdeckungselement (20) liegt.

12. Schutzabdeckung (1) nach einem der Ansprüche 5-11, wobei die zweiten Abdeckungselemente (30) in einer Draufsicht relativ zu einer jeweiligen Ebene (P), in der sie liegen, eine rechteckige Form aufweisen und eine vorderseitige Fläche (F) sichtbar und eine rückseitige Fläche (R) aufweisen, wobei die zweiten Abdeckungselemente (30) zwei Widerlagerlaschen (32) an jeweiligen Seitenkanten und wobei die Widerlagerlaschen (32) in jeweiligen Ebenen senkrecht zur Ebene (P) liegen, in der das gleiche zweite Abdeckungselement (30) liegt und mindestens einen Anschlagstreifen (34) an einer nicht seitlichen Kante aufweisen, wobei die Widerlagerlaschen (32) vorzugsweise zur vorderseitige Fläche (F) hin konvergieren.

13. Schutzabdeckung (1) nach einem der Ansprüche 2-12, wobei die Kopplungselemente (60) so konfiguriert sind, dass sie mit einem entsprechenden ersten Abdeckungselement (20) und einem entsprechenden zweiten Abdeckungselement (30) gekoppelt und mit diesem einstückig sind, wenn das Antriebsabdeckungselement (10) sich entlang der Bewegungsrichtung (G) der Gleitbahn (110) bewegt.

14. Schutzabdeckung (1) nach einem der Ansprüche 2-12, wobei die Kopplungselemente (60) so konfiguriert sind, dass sie mittels entfernbarer Widerlager an einem entsprechenden ersten Abdeckungselement (20) so verriegelt sind, dass sie einstückig mit einem entsprechenden ersten Abdeckungselement (20) und einem entsprechenden zweiten Abdeckungselement (30) sind, wenn sich das Antriebsabdeckungselement (10) entlang der Bewegungsrichtung (G) der Gleitbahn (110) bewegt.

15. Schutzabdeckung (1) nach einem der Ansprüche 2-14, wobei die Vielzahl an ersten Abdeckungselementen (20), die Vielzahl an zweiten Abdeckungselementen (30) und die Vielzahl an Kopplungselementen (60) so konfiguriert sind, dass sie gleitend in vorbestimmter Abfolge zwischen den Elementen derselben Vielzahl (20, 30, 60) sind und so dass mindestens die Vielzahl an ersten Abdeckungselementen (20) und die Vielzahl an zweiten Abdeckungselementen (30) in einer Konfiguration aus/eingezogen werden, in der die Schutzabdeckung (1) an der Werkzeugmaschine (100) installiert und im Gebrauch sind.

16. Schutzabdeckung (1) nach einem der Ansprüche 1-15, wobei die Antriebsmittel (40) Widerlagerflächen (41) umfassen, die mindestens an den ersten Abdeckungselementen (20) und an den zweiten Abdeckungselementen (30) an unterschiedlichen Positionen relativ zur Bewegungsrichtung (G) der Gleitbahn (110) vorhanden sind, so dass, wenn sich das Antriebsabdeckungselement (10) bewegt, sie zu unterschiedlichen Zeiten voneinander abgefangen werden, wodurch es ermöglicht wird, dass die ersten Abdeckungselemente (20) oder die zweiten Abdeckungselemente (30) gemäß der vorbestimmten Abfolge in einer Konfiguration angetrieben werden, in der die Schutzabdeckung (1) an der Werkzeugmaschine (100) installiert und im Gebrauch ist.

17. Schutzabdeckung (1) nach einem der Ansprüche 1-16, wobei die Antriebsmittel (40) das Antriebsabdeckungselement (10) umfassen, das konfiguriert ist, um zu ermöglichen, dass mindestens die ersten Abdeckungselemente (20) und die zweiten Abdeckungselemente (30) in Abfolge translatorisch angetrieben werden, um zu unterschiedlichen Zeiten voneinander abgefangen zu werden, um das Antreiben gemäß der vorbestimmten Abfolge zu ermöglichen, wenn sich das Antriebsabdeckungselement (10) in einer Konfiguration bewegt, in der die Schutzabdeckung (1) an der Werkzeugmaschine (100) installiert und im Gebrauch ist.

18. Schutzabdeckung (1) nach einem der Ansprüche 1-17, wobei das Antriebsabdeckungselement (10) eine erste Endkante (11), mit der ein Anfangsabdeckungselement (21), das einen Teil der Vielzahl an ersten Abdeckungselementen (20) ausbildet, reversibel befestigt ist, und eine zweite Endkante (12), an der ein Anfangsabdeckungselement (31), das Teil der Vielzahl an zweiten Abdeckungselementen (30) ausbildet, reversibel befestigt ist, aufweist.

19. Schutzabdeckung (1) nach Anspruch 18, wobei die Antriebsmittel (40) einen Pantograf-Mechanismus (42) umfasst, der mit dem Anfangsabdeckungselement (21), das Teil der Vielzahl an ersten Abdeckungselementen (20) ausbildet, und mit den verbleibenden Abdeckungselementen (20) verbindbar ist, so dass die Gleitbewegung mindestens aller ersten Abdeckungselemente (20) in einer Konfiguration, in der die Schutzabdeckung (1) an der Werkzeugmaschine (100) installiert und im Gebrauch ist, synchronisiert wird.

20. Schutzabdeckung (1) nach Anspruch 19, wobei die Antriebsmittel (40) einen Pantograf-Mechanismus (42) umfassen, der mit dem Anfangsabdeckungselement (31), das Teil der Vielzahl an zweiten Abdeckungselementen (30) ausbildet, und mit den verbleibenden zweiten Abdeckungselementen (30) verbindbar ist, so dass die Gleitbewegung aller zweiten Abdeckungselemente (30) in einer Konfiguration, in der die Schutzabdeckung (1) an der Werkzeugmaschine (100) installiert und im Gebrauch ist, synchronisiert wird.

## Revendications

1. Couvercle de protection (1) pour glissières (110) d'une machine-outil (100), comprenant :
- un élément de couvercle d'entraînement (10) pouvant être associé à une partie mobile d'une machine-outil (100) mobile en translation le long des glissières (110) ;
- une pluralité de premiers éléments de couvercle (20) situés sur un premier côté (11) de l'élément de couvercle d'entraînement (10) et associés de manière fonctionnelle à celui-ci et configurés pour se chevaucher et coulisser les uns par rapport aux autres le long d'une direction de déplacement (G) de la glissière (110) lorsque l'élément de couvercle d'entraînement (10) se déplace ;
- une pluralité de seconds éléments de couvercle (30) situés sur un second côté (12) de l'élément de couvercle d'entraînement (10) et associés de manière fonctionnelle à celui-ci et configurés pour se chevaucher et coulisser les uns par rapport aux autres le long d'une direction de déplacement (G) de la glissière (110) lorsque l'élément de couvercle d'entraînement (10) se déplace ;
- des moyens d'entraînement (40) configurés pour permettre un déplacement de translation en une succession prédéterminée au moins des premiers éléments de couvercle (20) et des seconds éléments de couvercle (30) lorsqu'un élément de couvercle d'entraînement (10) se déplace ; dans lequel le couvercle de protection (1) comprend une pluralité de moyens de verrouillage (50) associés de manière fonctionnelle entre les premiers éléments de couvercle (20) et les seconds éléments de couvercle (30), chaque moyen de verrouillage (50) de la pluralité de moyens de verrouillage (50) comportant au moins deux parties de verrouillage (51, 52) distinctes pour permettre un couplage réversible entre chaque premier élément de couvercle (20) dans la pluralité de premiers éléments de couvercle (20) et un second élément de couvercle (30) correspondant dans la pluralité de seconds éléments de couvercle (30).

2. Couvercle de protection (1) selon la revendication 1, comprenant une pluralité d'organes d'accouplement (60) configurés pour permettre au moins à la pluralité de seconds éléments de couvercle (30) d'être verrouillés de manière réversible sur le couvercle de protection (1) dans une succession prédéterminée, dans lequel les organes d'accouplement (60) sont configurés pour réaliser avec les seconds éléments de couvercle (30) une structure composite du type coque semi-fermée et/ou fermée dans une configuration où le couvercle de protection (1) est installé et utilisé sur la machine-outil (100).

3. Couvercle de protection (1) selon la revendication 1 ou 2, dans lequel les au moins deux parties de verrouillage (51, 52) distinctes de chaque moyen de verrouillage (50) comprennent un arrêt entre des languettes de butée (32) d'un second élément de couvercle (30) et un bord d'épaulement (22) correspondant d'un premier élément de couvercle (20) et des dents (23) d'un premier élément de couvercle (20) introduites dans une partie façonnée (33) respective d'un second élément de couvercle (30) correspondant.

4. Couvercle de protection (1) selon la revendication 3 lorsqu'elle dépend de la revendication 2, dans lequel la pluralité de moyens de verrouillage (50) est associée de manière fonctionnelle entre les premiers éléments de couvercle (20), les seconds éléments de couvercle (30) et les organes d'accouplement (60) et comprend un troisième élément de verrouillage (53) pour permettre l'introduction d'une bande d'arrêt (34) présente sur un second élément de couvercle (30) dans une fente de verrouillage (S) de largeur prédéterminée et formée entre un bord plié (24) d'un premier élément de couvercle (20) et une face de butée (61) d'un organe d'accouplement (60) correspondant dans une configuration où le couvercle de protection est installé et utilisé sur la machine-outil.

5. Couvercle de protection (1) selon la revendication 4, dans lequel les premiers éléments de couvercle (20) et les seconds éléments de couvercle (30) sont principalement de forme plate et reposent dans des plans respectifs (P) étant parallèles les uns aux autres.

6. Couvercle de protection (1) selon la revendication 5, dans lequel les premiers éléments de couvercle (20) sont, dans une vue en plan par rapport à un plan respectif (P) dans lequel ils reposent, sous la forme d'un cadre quadrangulaire avec un côté ouvert, les premiers éléments de couvercle (20) comportant une partie centrale (25) dotée d'une face avant (F) de manière apparente et d'une face arrière (R) et de deux extensions (26) se prolongeant le long de la direction d'extension (G) de la glissière (110) en correspondance des bords latéraux respectifs.

7. Couvercle de protection (1) selon la revendication 6, dans lequel les extensions (26) se prolongent le long de la direction d'extension (G) sur une longueur au moins suffisante pour excéder une longueur latérale de l'élément de couvercle d'entraînement (10) et pour atteindre le second côté (12) où les seconds éléments de couvercle (30) sont situés dans une configuration où le couvercle de protection (1) est installé et utilisé sur la machine-outil (100).

8. Couvercle de protection (1) selon la revendication 6 ou 7, dans lequel au moins une extension (26) de chaque premier élément de couvercle (20) comporte une section transversale en « L », avec le bord d'épaulement (22) perpendiculaire au plan (P), et se prolonge le long de la direction d'extension (G) de la glissière (110) sur une longueur prédéterminée.

9. Couvercle de protection (1) selon la revendication 8, dans lequel les deux extensions (26) de chaque premier élément de couvercle (20) comportent une section transversale en « L », avec le bord d'épaulement (22) perpendiculaire au plan (P) respectif.

10. Couvercle de protection (1) selon la revendication 9, dans lequel les dents (23) de chaque moyen de verrouillage (50) sont situées le long de chaque bord d'épaulement (22) de chaque épaulement latéral de chaque premier élément de couvercle (20).

11. Couvercle de protection (1) selon l'une quelconque des revendications 6-10, dans lequel le bord plié (24) est réalisé à une extrémité libre d'au moins une extension (26) de chaque premier élément de couvercle (20) et repose dans un plan transversal au plan (P) dans lequel repose le même premier élément de couvercle (20), le bord plié (24), de préférence, faisant face à la face avant (F) et étant positionné perpendiculairement au plan (P) dans lequel repose le premier élément de couvercle (20).

12. Couvercle de protection (1) selon l'une quelconque des revendications 5-11, dans lequel les seconds éléments de couvercle (30) sont, dans une vue en plan par rapport à un plan respectif (P) dans lequel ils reposent, de forme rectangulaire et comportent une face avant (F) de manière apparente et une face arrière (R), les seconds éléments de couvercle (30) comportant deux languettes de butée (32) en correspondance des bords latéraux respectifs et dans lequel les languettes de butée (32) reposent dans des plans respectifs perpendiculaires au plan (P), dans lequel repose le second élément de couvercle (30) lui-même, et au moins une bande d'arrêt (34) sur un bord non latéral, les languettes de butée (32) étant, de préférence, convergentes vers la face avant (F).

13. Couvercle de protection (1) selon l'une quelconque des revendications 2-12, dans lequel les organes d'accouplement (60) sont configurés pour être accouplés à / et solidaires d'un premier élément de couvercle (20) correspondant et à un second élément de couvercle (30) correspondant lorsque l'élément de couvercle d'entraînement (10) se déplace dans la direction de déplacement (G) de la glissière (110).

14. Couvercle de protection (1) selon l'une quelconque des revendications 2-12, dans lequel les organes d'accouplement (60) sont configurés pour être verrouillés, au moyen de butées amovibles, à un premier élément de couvercle (20) correspondant de manière à être solidaires d'un premier élément de couvercle (20) correspondant et d'un second élément de couvercle (30) correspondant lorsque l'élément de couvercle d'entraînement (10) se déplace dans la direction de déplacement (G) de la glissière (110).

15. Couvercle de protection (1) selon l'une quelconque des revendications 2-14, dans lequel la pluralité de premiers éléments de couvercle (20), la pluralité de seconds éléments de couvercle (30) et la pluralité d'organes d'accouplement (60) sont configurées pour pouvoir coulisser en succession prédéterminée entre les éléments de la même pluralité (20, 30, 60) et de telle manière qu'au moins la pluralité de premiers éléments de couvercle (20) et la pluralité de seconds éléments de couvercle (30) soient étendues/rassemblées dans une configuration où le couvercle de protection (1) est installé et utilisé sur la machine-outil (100).

16. Couvercle de protection (1) selon l'une quelconque des revendications 1-15, dans lequel les moyens d'entraînement (40) comprennent des faces de butée (41) présentes respectivement au moins sur les premiers éléments de couvercle (20) et sur les seconds éléments de couvercle (30) à différentes positions par rapport à la direction de déplacement (G) de la glissière (110), de sorte que, lorsque l'élément de couvercle d'entraînement (10) se déplace, ils sont interceptés à des moments différents les uns des autres, ce qui permet aux premiers éléments de couvercle (20) ou aux seconds éléments de couvercle (30) d'être entraînés selon la succession prédéterminée dans une configuration où le couvercle de protection (1) est installé et utilisé sur la machine-outil (100).

17. Couvercle de protection (1) selon l'une quelconque des revendications 1-16, dans lequel les moyens d'entraînement (40) comprennent l'élément de couvercle d'entraînement (10) étant configuré pour permettre au moins aux premiers éléments de couvercle (20) et aux seconds éléments de couvercle (30) d'être entraînés en translation les uns après les autres, de manière à être interceptés à des moments différents les uns des autres pour permettre l'entraînement selon la succession prédéterminée lorsque l'élément de couvercle d'entraînement (10) se déplace, dans une configuration où le couvercle de protection (1) est installé et utilisé sur la machine-outil (100).

18. Couvercle de protection (1) selon l'une quelconque des revendications 1-17, dans lequel l'élément de couvercle d'entraînement (10) comporte un premier bord d'extrémité (11) auquel un élément de couvercle initial (21), faisant partie de la pluralité de premiers éléments de couvercle (20), est fixé de manière réversible, et un second bord d'extrémité (12) auquel un élément de couvercle initial (31), faisant partie de la pluralité de seconds éléments de couvercle (30), est fixé de manière réversible.

19. Couvercle de protection (1) selon la revendication 18, dans lequel les moyens d'entraînement (40) comprennent un mécanisme à pantographe (42) pouvant être relié à l'élément de couvercle initial (21) faisant partie de la pluralité de premiers éléments de couvercle (20) et des premiers éléments de couvercle (20) restants de manière à synchroniser le déplacement de coulissement d'au moins tous les premiers éléments de couvercle (20) dans une configuration où le couvercle de protection (1) est installé et utilisé sur la machine-outil (100).

20. Couvercle de protection (1) selon la revendication 19, dans lequel les moyens d'entraînement (40) comprennent un mécanisme à pantographe (42) pouvant être relié à l'élément de couvercle initial (31) faisant partie de la pluralité de seconds éléments de couvercle (30) et de seconds éléments de couvercle (30) restants de manière à synchroniser le déplacement coulissant de tous les seconds éléments de couvercle (30) dans une configuration dans laquelle le couvercle de protection (1) est installé et utilisé sur la machine-outil (100).
